# EUROPÄISCHE PATENTANMELDUNG

(11) **EP 0 629 936 A2**
(43) Veröffentlichungstag der Anmeldung: **21.12.1994**
(21) Anmeldenummer: 94100416.0
(22) Anmeldetag: 13.01.1994
(51) Int. Cl.: G05D 16/06

(54) **Druckregelventil**

(30) Priorität: 15.06.1993 DE 9308900 U
(71) Anmelder: Gustav Wahler GmbH u. Co, D-73730 Esslingen (DE)
(72) Erfinder: Wahler, Hans, Dipl.-Ing., D-73728 Esslingen (DE)
(74) Vertreter: Kratzsch, Volkhard, Dipl.-Ing.

(57) **Zusammenfassung**

Es wird ein Druckregelventil (10) vorgeschlagen, mit einem Ventilgehäuse (11) und einem Ventilglied (30) darin, das von einer Regelfeder (15) in Richtung eines Ventilsitzes (31) beaufschlagt ist und der Regelung eines unter Druck stehenden Mediums, insbesondere einer Flüssigkeit, dient, wobei das Ventilglied (30) eine Kugel (33), die eine dem Ventilsitz (31) zugeordnete Ventilsitzfläche (34) trägt, und ein die Kugel (33) tragendes Halteteil (32) aufweist. Die Kugel (33) ist in eine im Halteteil (32) einstückig damit ausgebildete Kugelaufnahme (41) verliersicher eingeklipst und innerhalb der Kugelaufnahme (41) schwenkbeweglich gehalten. Dadurch ist die Anzahl der Bauteile reduziert und die Montage vereinfacht.

## Beschreibung

Die Erfindung bezieht sich auf ein Druckregelventil mit den Merkmalen im Oberbegriff des Anspruchs 1.

Es sind Druckregelventile dieser Art bekannt, bei denen die Kugel durch eine besondere Haltescheibe gehalten wird, die als zusätzliches Bauteil am Halteteil zu befestigen ist. Dieses zusätzliche Bauteil und die dadurch bedingten Montageschritte sind aufwendig. Beim Anbringen der Haltescheibe muß besonders darauf geachtet werden, daß diese nicht so fest am Halteteil fixiert wird, daß die Kugel zwischen der Haltescheibe und dem Halteteil klemmt.

Der Erfindung liegt die Aufgabe zugrunde, ein Druckregelventil der eingangs genannten Art so auszubilden, daß dieses weniger Bauteile hat und somit kostengünstiger ist und die Montage erleichtert ist.

Die Aufgabe ist bei einem Druckregelventil der eingangs genannten Art gemäß der Erfindung durch die Merkmale im Kennzeichnungsteil des Anspruchs 1 gelöst. Weitere vorteilhafte Erfindungsmerkmale und Ausgestaltungen dazu ergeben sich aus den Ansprüchen 2 bis 24.

Beim erfindungsgemäßen Druckregelventil ist eine Reduzierung der Bauteile erreicht, da es der besonderen Haltescheibe zum Befestigen der Kugel nicht bedarf. Dadurch werden die Kosten reduziert. Außerdem sind die Montage vereinfacht und Montagefehler ausgeschlossen, da die Kugel beim Anbringen des Ventilgliedes lediglich in die Kugelaufnahme des Halteteils eingeklipst werden muß. Dabei ist gewährleistet, daß die Kugel immer schwenkbeweglich und somit spielend in der Kugelaufnahme gehalten ist. Die Gefahr eines Klemmens der Kugel ist vermieden.

Weitere Einzelheiten und Vorteile der Erfindung ergeben sich aus der nachfolgenden Beschreibung.

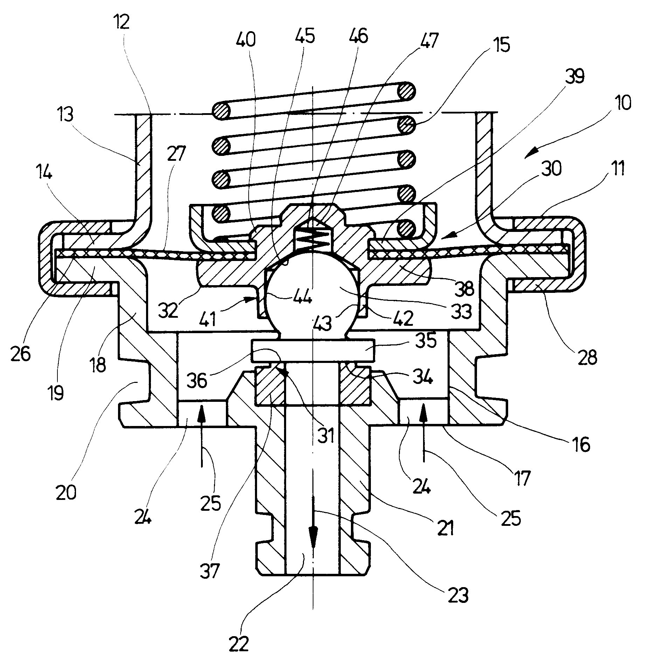

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Die Zeichnung zeigt einen schematischen senkrechten Schnitt eines Druckregelventils in seiner Schließstellung.

Das in der Zeichnung gezeigte Druckregelventil 10 weist ein zumindest zweiteiliges Ventilgehäuse 11 auf, dessen in der Zeichnung nur zum Teil gezeigte obere Gehäusehälfte 12 z.B. etwa hutförmig gestaltet ist und einen Zylinderteil 13 mit sich anschließendem Flanschrand 14 aufweist. Die in der Zeichnung obere Gehäusehälfte 12 besteht aus Metall und besteht insbesondere z.B. aus einem gezogenen Blechteil. Am nicht sichtbaren, in der Zeichnung oberen Ende der Gehäusehälfte 12 kann in einem Gewinde ein koaxialer, verstellbarer Gewindebolzen eingeschraubt sein, an dem ein Abstützteller für das zugewandte Ende einer sichtbaren Regelfeder 15 axial abgestützt ist. Auf diese Weise kann das Druckregelventil 10 auf den gewünschten Druck, der dadurch eingeregelt werden soll, eingestellt werden.

Das Ventilgehäuse 11 weist ferner eine in der Zeichnung untere Gehäusehälfte 16 auf, die etwa topfförmig gestaltet ist und einen Boden 17, einen anschließenden etwa zylinrischen und abgestuften Wandteil 18 sowie einen daran anschließenden Flanschrand 19 aufweist. Der Wandteil 18 enthält auf seiner Außenseite eine umlaufende Nut 20, in der bei der Montage ein nicht gezeigter O-Ring aufgenommen wird. Die Gehäusehälfte 16 besteht ebenfalls aus Metall. Sie ist z.B. durch spanende Formgebung hergestellt, z.B. ein Drehteil. Am Boden 17 ist ein Rohrteil 21 gehalten. Der Rohrteil 21 ist hier einstückig mit der Gehäusehälfte 16, insbesondere dem Boden 17. Bei einem anderen, nicht gezeigten Ausführungsbeispiel ist der Rohrteil 21 ein separates Bauteil, das an der Gehäusehälfte 16, insbesondere dem Boden 17, befestigt ist, z.B. darin eingepreßt ist. Der Rohrteil 21 dient mit seinem inneren Rohrkanal 22 der Führung des Mediums, dessen Druck zu regeln ist, und zwar insbesondere der Abführung gemäß Pfeil 23 dieses Mediums. Für die Zuführung des Mediums in das Innere der Gehäusehälfte 16 ist in dem an den Rohrteil 21 angrenzenden Boden 17 mindestens eine Öffnung 24, z.B. ein fensterartiger Durchbruch, enthalten. Beim gezeigten Ausführungsbeispiel sind vier solche Öffnungen 24 vorgesehen, die z.B. langlochartig gestaltet sind und in Umfangsrichtung in Abständen voneinander angeordnet sind. Das Medium wird in Richtung der Pfeile 25 durch die mindestens eine Öffnung 24 in das Innere der Gehäusehälfte 16 eingeleitet.

Zwischen beiden Gehäusehälften 12 und 16, insbesondere deren Flanschrändern 14 und 19, ist mit ihrem Rand 26 eine elastische Membran 27 eingespannt, an der ein allgemein mit 30 bezeichnetes Ventilglied befestigt ist. Die Membran 27 mit dem Ventilglied 30 schließt das Innere der unteren Gehäusehälfte 16 zur gegenüberliegenden Membranseite und zur Gehäusehälfte 12 ab. Die Membran 27 mitsamt dem Ventilglied 30 bildet ein durch den Druck des Mediums betätigbares Speichermittel. Die Membran 27 ist durch das Medium entgegen der Wirkung der Regelfeder 15 auslenkbar.

Beide Gehäusehälfte 12, 16 sind im Bereich ihrer Flanschränder 14 und 19 zusammengespannt. Dies kann durch eine Bördelverbindung z.B. dergestalt geschehen, daß einer der Flanschränder 14, 19 über den anderen Flanschrand hinweg umgebördelt wird. Statt dessen ist beim gezeigten Ausführungsbeispiel ein besonderer Bördelverbinder 28 in Form etwa eines liegenden U vorgesehen, der mit seinen Schwenkeln über beide Flanschränder 14 und 19 hinweggreift und diese einschließlich des dazwischen befindlichen Randes 26 der Membran 27 fest und dicht zusammenspannt.

Das im Ventilgehäuse 11 enthaltene Ventilglied 30 ist von der Regelfeder 15 in Richtung eines Ventilsitzes 31 beaufschlagt und dient der Regelung des unter Druck stehenden, durch die mindestens eine Öffnung 24 eingeleiteten Mediums, insbesondere einer Flüssigkeit. Das Medium besteht z.B. aus Kraftstoff und wird von einer Kraftstofförderpumpe kommend in Richtung der Pfeile 25 eingeleitet.

Das Ventilglied 30 weist ein insbesondere metallisches Halteteil 32 und eine Kugel 33 auf, die mit einem wesentlichen Teil im Halteteil 32 aufgenommen ist und eine dem Ventilsitz 31 zugeordnete Ventilsitzfläche 34 trägt. Beim gezeigten Ausführungsbeispiel ist die Ventilsitzfläche 34 dadurch verwirklicht, daß die Kugel 33 mit einem Ventilteller 35 versehen ist, auf dessen Unterseite die Ventilsitzfläche 34 vorgesehen ist. Die Kugel 33 kann mit dem Ventilteller 35 fest verbunden sein, z.B. durch Schweißen, Löten, Schrauben od.dgl. Beim gezeigten Ausführungsbeispiel ist die Kugel 33 mit dem Ventilteller 35 einstückig, wobei es sich z.B. um ein durch spanende Formgebung hergestelltes Metallteil handelt.

Bei einem anderen, nicht gezeigten Ausführungsbeispiel fehlt der Ventilteller 35. Statt dessen ist die Ventilsitzfläche 34 durch einen Bereich der Umfangsfläche der Kugel 33 selbst gebildet. Der zugeordnete Ventilsitz für diesen Fall weist eine Ringkante oder Ringfläche auf, die am zugewandten Ende auf der Innenseite des Rohrteiles 21 gebildet ist.

Beim gezeigten Ausführungsbeispiel ist der der Ventilsitzfläche 34 am Ventilteller 35 zugeordnete Ventilsitz 31 als ebene Ventilsitzringfläche 36 ausgebildet, die der Ventilsitzfläche 34 zugewandt ist und dazu etwa parallel verläuft, wobei diese Ventilsitzringfläche 36 am zugewandten stirnseitigen Ende des Rohrteiles 21 vorgesehen ist. Dabei kann diese Ventilsitzringfläche 36 am Rohrteil 21 selbst ausgebildet sein. Statt dessen ist beim gezeigten Ausführungsbeispiel die Ventilsitzringfläche 36 an einer Scheibe 37, Buchse od.dgl. ausgebildet, die ihrerseits am Rohrteil 21 befestigt ist, z.B. eingepreßt ist. Die Scheibe 37, Buchse od.dgl. besteht z.B. aus gehärtetem Metall. Der die Ventilsitzringfläche 36 tragende Bereich kann vom übrigen Bereich der Scheibe 37, Buchse od.dgl. stufenförmig abgesetzt sein, wie in der Zeichnung gezeigt ist, wobei dessen die Ventilsitzringfläche 36 bildende Oberfläche besonders bearbeitet, insbesondere geläppt, sein kann.

Das Halteteil 32 des Ventilgliedes 30 liegt mit einem Flansch 38 auf der in der Zeichnung unteren Seite der Membran 27 an. Auf der gegenüberliegenden Seite der Membran 27 liegt ein Federteller 39 auf, der fest mit dem Halteteil 32 verbunden und gegen die Membran 27 angedrückt ist. Der Federteller 39 ist z.B. durch Umbördeln, Nieten, Umnieten od.dgl., auf jeden Fall durch nichtspanende Umformung des Halteteils 32, an letzterem gehalten. Aufgrund der Befestigung durch Umnieten ergibt sich am Halteteil 32 ein den Federteller 39 formschlüssig übergreifender Vorsprung 40. Am Federteller 39 ist das sichtbare Ende der Regelfeder 15 abgestützt.

Die Kugel 33 ist in eine im Halteteil 32 einstückig damit ausgebildete Kugelaufnahme 41 verliersicher und unter Ausnutzung der Werkstoffelastizität eingeklipst, wobei die Kugel 33 innerhalb der Kugelaufnahme 41 nach allen Seiten schwenkbeweglich gehalten ist, so daß die Kugel 33 sich jeweils selbsttätig vor allem beim Schließen des Druckregelventils 10 so ausrichten kann, daß die Ventilsitzfläche 34 zuverlässig plan auf der Ventilsitzringfläche 36 aufsitzt und ein zuverlässiger Abschluß erfolgt. Dadurch, daß die Kugel 33 in die Kugelaufnahme 41 unter Ausnutzung der Werkstoffelastizität eingeklipst ist, wird die Anzahl der Bauteile reduziert und der Zusammenbau, insbesondere die Anbringung der Kugel 33 am Halteteil 32, erheblich vereinfacht, wobei jegliche Gefahr eines etwaigen Festklemmens der Kugel 33 im Halteteil 32 vermieden ist.

Das Halteteil 32 weist als Kugelaufnahme 41 einen abstehenden, ringsumlaufenden oder aus einzelnen voneinander getrennten Lappen gebildeten Kragen 42 auf, der über mehr als eine Kugelhälfte der Kugel 33 hinweggreift und die Kugel 33 jenseits des Meridians auf kleinerem Umfangskreis verliersicher umfaßt. Dabei ist die Anordnung so getroffen, daß der Kragen 42 aus elastisch federndem Material besteht und/oder elastisch federnd ausgebildet ist. Der Kragen 42 weist eine etwa zylindrische innere Umfangsfläche 43 auf. Im Bereich der inneren Umfangsfläche ist der Kragen 42 mit einer die Kugel aufnehmenden Hinterschnittfläche 44 versehen. Dadurch ist in einfacher Weise erreicht, daß das in der Zeichnung untere Ende des Kragens 42 mit seiner inneren Umfangsfläche die Kugel 33 jenseits des Meridians und auf kleinerem Umfangskreis umfassen kann, und dies so, daß die Kugel 33 im Kragen 42 durch Formschluß verliersicher und dabei frei schwenkbeweglich gehalten ist. Diese Gestaltung macht es möglich, unter Ausnutzung der Werkstoffelastizität des Kragens 42 bei der Montage die Kugel 33 in die Kugelaufnahme 41 hineinzudrücken. Beim Hineindrücken bewirkt der größte Umfangsteil der Kugel 33 beim Auftreffen auf das in der Zeichnung untere Ende des Kragens 42, daß der Kragen 42 federelastisch zumindest geringfügig radial nach außen gedrückt wird, soweit, daß die Kugel 33 in die Kugelaufnahme 41 hineinrutschen kann, woraufhin der Kragen 42 federelastisch in seine ursprüngliche Form zurückfedert und mit seinem in der Zeichnung unteren Ende die Kugel 33 jenseits des Meridians auf kleinerem Umfangskreis formschlüssig umfaßt.

Das Halteteil 32 ist im Bodenbereich 45 etwa kegelstumpfförmig eingesenkt. Das Halteteil 32 enthält eine die Kugel 33 in Richtung des Ventilsitzes 31 beaufschlagende Feder 46, die z.B. innerhalb einer bodenseitig eingetieften Tasche 47 aufgenommen und abgestützt ist und mit derem anderen Ende an der Kugel 33 abgestützt ist. Das insgesamt einstückige Halteteil 32 besteht aus einem Metallteil, der z.B. durch spanende Formgebung hergestellt ist. Statt dessen ist auch ein in anderer Weise erzeugtes Metallteil oder Kunststoffteil möglich.

Das unter Druck z. B. von einer Kraftstofförderpumpe herkommende Medium, z.B. Kraftstoff, das in Pfeilrichtung 25 durch die mindestens eine Öffnung 24 einströmt, bewirkt eine Bewegung der Membran 7 mit Ventilglied 30 gegen die Wirkung der Regelfeder 15, wobei bei entsprechendem Druck und unter Berücksichtigung der Einstellung der Regelfeder 15 das Ventiglied 30 vom Ventilsitz 31 abgehoben wird. Dabei übernimmt das Druckregelventil 10 die Funktion der Regelung eines konstanten, durch die Kraft der Regelfeder 15 bestimmten Druckes des Mediums. Das Medium kann bei abgehobenem Ventilglied 30 durch den Rohrkanal 22 in Pfeilrichtung 23 mit dem derart eingeregelten Druck abströmen. Wird nun die Mediumförderung unterbrochen, so schließt das Druckregelventil 10. Die Regelfeder 15 drückt das Ventilglied 30 in die gezeigte Schließstellung, in der die am Ventilteller 35 vorgesehene Ventilsitzfläche 34 auf der Ventilsitzringfläche 36 aufsitzt und somit die Verbindung zwischen dem Inneren der Gehäusehälfte 16 und dem Rohrkanal 22 unterbrochen ist.

## Patentansprüche

1. Druckregelventil, mit einem Ventilgehäuse (11) und einem Ventilglied (30) darin, das von einer Regelfeder (15) in Richtung eines Ventilsitzes (31) beaufschlagt ist und der Regelung eines unter Druck stehenden Mediums, insbesondere einer Flüssigkeit, dient, wobei das Ventilglied (30) eine Kugel (33), die eine dem Ventilsitz (31) zugeordnete Ventilsitzfläche (34) trägt, und ein die Kugel (33) tragendes Halteteil (32) aufweist,
**dadurch gekennzeichnet,**
daß die Kugel (33) in eine im Halteteil (32) einstückig damit ausgebildete Kugelaufnahme (41) verliersicher eingeklipstist und innerhalb der Kugelaufnahme (41) schwenkbeweglich gehalten ist.

2. Druckregelventil nach Anspruch 1,
**dadurch gekennzeichnet,**
daß das Halteteil (32) als Kugelaufnahme (41) einen abstehenden, ringsum laufenden oder aus einzelnen, voneinander getrennten Lappen gebildeten Kragen (42) aufweist, der über mehr als eine Kugelhälfte der Kugel (33) hinweggreift und die Kugel (33) jenseits des Meridians auf kleinerem Umfangskreis verliersicher umfaßt.

3. Druckregelventil nach Anspruch 2,
**dadurch gekennzeichnet,**
daß der Kragen (42) aus elastisch federndem Material besteht und/oder elastisch federnd ausgebildet ist.

4. Druckregelventil nach Anspruch 2 oder 3,
**dadurch gekennzeichnet,**
daß der Kragen (42) eine etwa zylindrische innere Umfangsfläche (43) aufweist.

5. Druckregelventil nach einem der Ansprüche 2 bis 4,
**dadurch gekennzeichnet,**
daß der Kragen (42) im Bereich der inneren Umfangsfläche (43) eine die Kugel (33) aufnehmende Hinterschnittfläche (44) aufweist.

6. Druckregelventil nach einem der Ansprüche 1 bis 5,
**dadurch gekennzeichnet,**
daß das Halteteil (32) im Bodenbereich (45) etwa kegelstumpfförmig eingesenkt ist.

7. Druckregelventil nach einem der Ansprüche 1 bis 6,
**dadurch gekennzeichnet,**
daß das Halteteil (32) eine die Kugel (33) in Richtung des Ventilsitzes (31) beaufschlagende Feder (46) enthält, vorzugsweise innerhalb einer bodenseitig eingetieften Tasche (47).

8. Druckregelventil nach einem der Ansprüche 1 bis 7,
**dadurch gekennzeichnet,**
daß das einstückige Halteteil (32) aus Metall oder Kunststoff gebildet ist.

9. Druckregelventil nach einem der Ansprüche 1 bis 8,
**dadurch gekennzeichnet,**
daß im Ventilgehäuse (11) ein durch den Druck des Mediums betätigbares Speichermittel in Form einer elastischen Membran (27) vorgesehen ist, die durch das Medium entgegen der Wirkung der Regelfeder (15) auslenkbar ist und an der das Ventilglied (30) befestigt ist.

10. Druckregelventil nach einem der Ansprüche 1 bis 9,
**dadurch gekennzeichnet,**
daß das Halteteil (32) mit einem Flansch (38) auf einer Seite der Membran (27) anliegt und daß auf der gegenüberliegenden Seite der Membran (27) ein Federteller (39) aufliegt, der fest mit dem Halteteil (32) verbunden und gegen die Membran (27) angedrückt ist, z.B. durch Umbördeln, Nieten, Umnieten oder dergl. insbesondere nichtspanende Umformung des Halteteils (32) gehalten ist und an dem die Regelfeder (15) abgestützt ist.

11. Druckregelventil nach einem der Ansprüche 1 bis 10,
**dadurch gekennzeichnet,**
daß die Ventilsitzfläche durch einen Bereich der Kugelumfangsfläche der Kugel (33) selbst gebildet ist.

12. Druckregelventil nach Anspruch 11,
**dadurch gekennzeichnet,**
daß der zugeordnete Ventilsitz (31) eine Ringkante oder Ringfläche aufweist, die am zugewandten Ende auf der Innenseite eines Rohrteils (21) gebildet ist, der der Führung des Mediums, insbesondere der Abführung, dient.

13. Druckregelventil nach einem der Ansprüche 1 bis 10,
**dadurch gekennzeichnet,**
daß die Kugel (33) mit einem Ventilteller (35) versehen ist, der die Ventilsitzfläche (34) trägt.

14. Druckregelventil nach Anspruch 13,
**dadurch gekennzeichnet,**
daß die Kugel (33) mit dem Ventilteller (35) fest verbunden ist, z.B. durch Schweißen, Löten od.dgl.

15. Druckregelventil nach Anspruch 13 oder 14,
**dadurch gekennzeichnet,**
daß die Kugel (33) mit dem Ventilteller (35) einstückig ist.

16. Druckregelventil nach einem der Ansprüche 13 bis 15,
**dadurch gekennzeichnet,**
daß der zugeordnete Ventilsitz (31) eine der Ventilsitzfläche (34) am Ventilteller (35) zugewandte, dazu etwa parallele Ventilsitzringfläche (36) aufweist, die am zugewandten stirnseitigen Ende eines Rohrteiles (21) vorgesehen ist, der der Führung des Mediums, insbesondere der Abführung, dient.

17. Druckregelventil nach Anspruch 16,
**dadurch gekennzeichnet,**
daß die Ventilsitzringfläche (36) am Rohrteil (21) selbst ausgebildet ist.

18. Druckregelventil nach Anspruch 16,
**dadurch gekennzeichnet,**
daß die Ventilsitzringfläche (36) an einer Scheibe (37), Buchse od.dgl. ausgebildet ist, die am Rohrteil (21) befestigt ist.

19. Druckregelventil nach Anspruch 18,
**dadurch gekennzeichnet,**
daß die Scheibe (37), Buchse od.dgl. aus gehärtetem Metall besteht.

20. Druckregelventil nach Anspruch 18 oder 19,
**dadurch gekennzeichnet,**
daß der die Ventilsitzringfläche (36) tragende Bereich vom übrigen Teil der Scheibe (37), Buchse od.dgl. abgesetzt ist und dessen die Ventilsitzringfläche (36) bildende Oberfläche besonders bearbeitet ist, insbesondere geläppt ist.

21. Druckregelventil nach einem der Ansprüche 1 bis 20,
**dadurch gekennzeichnet,**
daß das Ventilglied (30) aus Metall besteht, insbesondere aus einem Drehteil gebildet ist.

22. Druckregelventil nach einem der Ansprüche 1 bis 21,
**dadurch gekennzeichnet,**
daß der Rohrteil (21) einstückiger Teil einer insbesondere metallischen Gehäusehälfte (16) ist oder an dieser befestigt ist, insbesondere darin eingepreßt ist.

23. Druckregelventil nach einem der Ansprüche 1 bis 22,
**dadurch gekennzeichnet,**
daß das Ventilgehäuse (11) eine Zweite insbesondere metallische Gehäusehälfte (12) aufweist und daß beide Gehäusehälften (12,16) mit Flanschrändern (14,19), zwischen denen die Membran (21) randseitig (26) eingespannt ist, aneinandergesetzt und zusammengespannt sind, z.B. durch einen Bördelverbinder (28).

24. Druckregelventil nach einem der Ansprüche 1 bis 23,
**dadurch gekennzeichnet,**
daß die Gehäusehälfte (16), die den Ventilsitz (31) und den Rohrteil (21) trägt, in einer an den Rohrteil (21) vorzugsweise angrenzenden, z.B. bodenseitigen, Wandung (17) mindestens eine Öffnung (24). z.B. einen fensterartigen Durchbruch, enthält, die der Führung des Mediums, insbesondere der Zuführung, dient.
